# EUROPEAN PATENT SPECIFICATION

(11) **EP 3 054 196 B1**
(45) Date of publication and mention of the grant of the patent: **08.04.2020**
(21) Application number: 16154201.4
(22) Date of filing: 04.02.2016
(51) Int. Cl.: F16H 59/10, F16H 61/24, F16H 59/02

(54) **SHIFT DEVICE**
SCHALTVORRICHTUNG
DISPOSITIF DE CHANGEMENT DE VITESSES

(30) Priority: 05.02.2015 JP 2015021133
(43) Date of publication of application: 10.08.2016
(73) Proprietor: KABUSHIKI KAISHA TOKAI-RIKA-DENKI-SEISAKUSHO, Niwa-gun Aichi 480-0195 (JP)
(72) Inventor: NAKANISHI, Kenji, Niwa-gun, Aichi 480-0195 (JP)
(74) Representative: TBK

(56) References cited:
- EP-A1- 1 262 689
- EP-A1- 1 752 688
- KR-B1- 101 341 131
- US-B1- 6 382 045

## Description

### BACKGROUND

### Technical Field

The present invention relates to a shift device in which a shift lever is moved to change a shift position of the shift lever.

### Related Art

In a shift lever device described in Japanese Patent Application Laid-Open (JP-A) No. 2010-234950, a sensor switch is provided at housing and a magnet is provided at a shift lever, the sensor switch detects the magnet, and a shift position of the shift lever is thereby detected.

In this shift lever device, if separation between the sensor switch (respective detection sensors) and the magnet could be suppressed when the shift lever is pivoted, the detection accuracy of the shift position of the shift lever could be improved.

US 6 382 045 B1 discloses a shift lever device having the features of the preamble of claim 1. Further prior art is discussed in KR 101 341 131 B1, EP 1 752 688 A1, and EP 1 262 689 A1.

### SUMMARY

In consideration of the above circumstances, an object of the present invention is to obtain a shift device capable of improving the detection accuracy of a shift position of a shift lever.

The object is achieved by a shift device having the features of independent claim 1. Further advantageous developments are set out in the dependent claims.

According to the present invention, when the shift lever is moved in the front-rear direction, the biasing means biases the shift lever to suppress separation between the detection section and the detection means. This enables the detection accuracy of the shift position of the shift lever to be improved.

In the shift device according to the present invention, the restricting means restricts at least one of approach or separation between the detection section and the detection means. Thus, even when a high load force acts on the shift lever, at least one of approach or separation between the detection section and the detection means can be restricted.

Preferably, the biasing means biases the shift lever toward a shift position side. This enables the shift lever to be moved to a shift position side by the biasing means.

In the shift device according to the present invention, the detection means is disposed laterally with respect to the front-rear direction of the shift lever. This enables a large separation between the detection section and the detection means according to the movement position of the shift lever in the front-rear direction to be suppressed, and enables the detection accuracy of the shift position of the shift lever to be effectively improved.

### BRIEF DESCRIPTION OF THE DRAWINGS

Exemplary embodiments of the present invention will be described in detail based on the following figures, wherein:
Fig. 1 is an exploded perspective view illustrating a shift lever device according to an exemplary embodiment of the present invention, viewed diagonally from the rear left;
Fig. 2 is a side view illustrating a shift lever device according to an exemplary embodiment of the present invention, viewed from the left;
Fig. 3 is a cross-section (a cross-section along line 3-3 in Fig. 2) illustrating a shift lever device according to an exemplary embodiment of the present invention, viewed from the rear; and
Fig. 4 is an enlarged cross-section illustrating a relevant portion (the portion in region A in Fig. 3) of a shift lever device according to an exemplary embodiment of the present invention, viewed from the rear.

### DETAILED DESCRIPTION

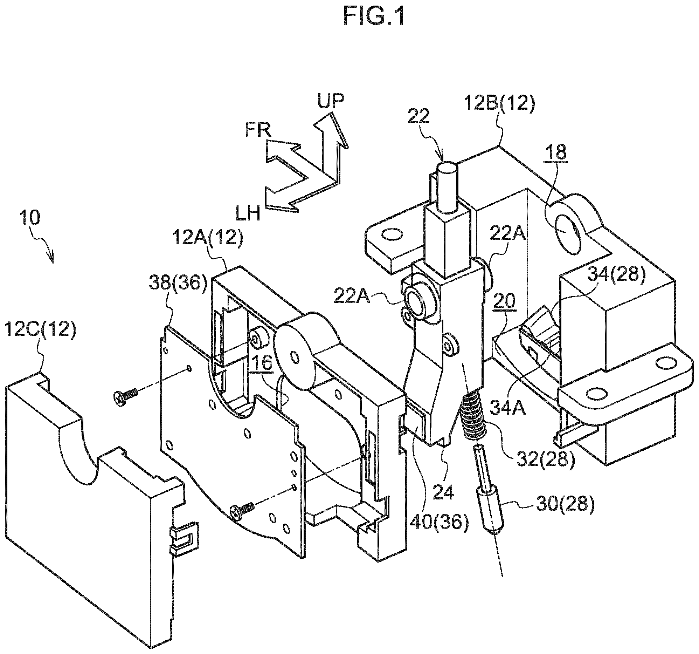

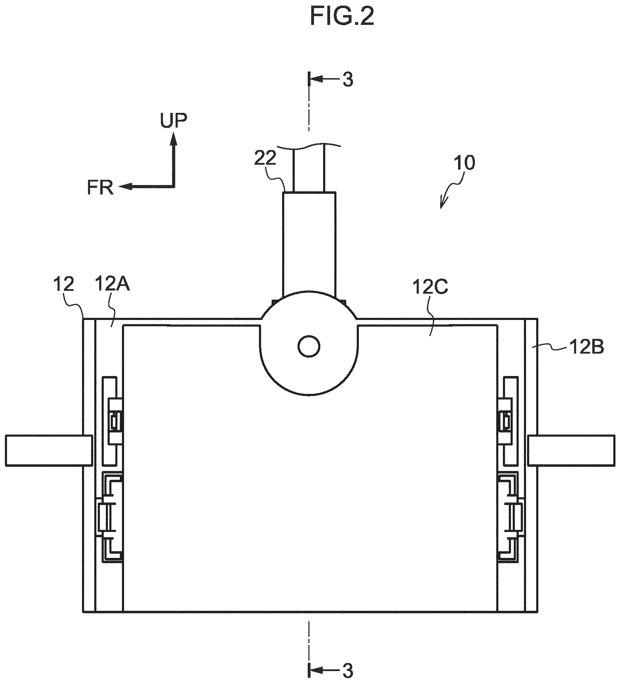

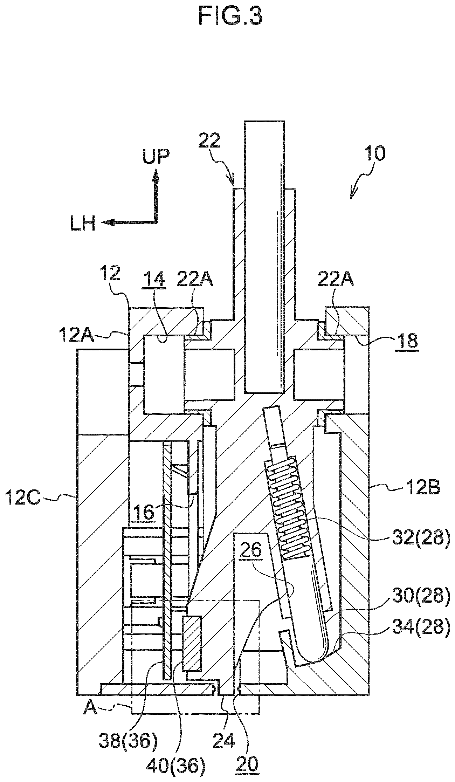

Fig. 1 is an exploded perspective view illustrating a shift lever device 10, serving as a shift device according to an exemplary embodiment of the present invention, viewed diagonally from the rear left, and Fig. 2 is a side view illustrating the shift lever device 10 viewed from the left. Fig. 3 is a cross-section (a cross-section along line 3-3 in Fig. 2) illustrating the shift lever device 10 viewed from the rear. Note that in the drawings, the arrow FR indicates the front of the shift lever device 10, the arrow LH indicates the left of the shift lever device 10, and the arrow UP indicates the upper side of the shift lever device 10.

The shift lever device 10 according to the present exemplary embodiment is what is referred to a straight type and a shift-by-wire type shift device. The shift lever device 10 is a floor-mounted type device installed at a floor section (vehicle body side) of a vehicle cabin at the vehicle width direction inside of a driver seat (not illustrated in the drawings) of a vehicle (automobile). The front, left, and upper side of the shift lever device 10 respectively face the front, left, and upper side of the vehicle.

As illustrated in Fig. 1 to Fig. 3, substantially rectangular box shaped housing 12, serving as a supporting body made of resin, is provided at the shift lever device 10, and the housing 12 is fixed to the floor section of the vehicle cabin.

A bottomed, substantially rectangular tube shaped first plate 12A, serving as a first dividing member, is provided at the housing 12, and the inside of the first plate 12A is open toward the left side. A circular shaped first support hole 14 is formed in an upper end portion of the first plate 12A, and the first support hole 14 is open toward the right side. A rectangular shaped through-hole 16 is formed piercing through a right wall of the first plate 12A.

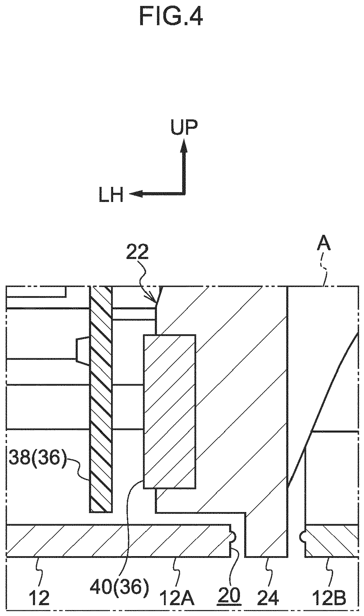

A substantially rectangular box shaped second plate 12B, serving as a second dividing member, is provided at the housing 12 at the right side of the first plate 12A, and the inside of the second plate 12B is open toward the left side and the upper side. The second plate 12B is assembled to the first plate 12A, and the left side inside the second plate 12B is closed off by the first plate 12A. A circular shaped second support hole 18 is formed piercing through an upper end portion of a right wall of the second plate 12B, and the second support hole 18 is disposed coaxially to the first support hole 14 of the first plate 12A. An elongated rectangular shaped restricting hole 20, configuring a restricting means, is formed piercing through a left end of a lower wall of the second plate 12B. The restricting hole 20 extends along the front-rear direction, and the left side thereof is closed off by a lower wall of the first plate 12A (see Fig. 4).

A substantially rectangular plate shaped cover 12C, serving as a third dividing member, is provided at the housing 12 at the left side of the first plate 12A. The cover 12C is assembled to the first plate 12A, and closes off the left side inside the first plate 12A.

An elongated rod shaped lever 22, serving as a shift body made of resin, is provided at the shift lever device 10. A pair of circular tube shaped support shafts 22A are integrally provided at an up-down direction intermediate portion of the lever 22, and the support shafts 22A project out coaxially at the left side and the right side of the lever 22. The left side and right side support shafts 22A are respectively fitted into the first support hole 14 of the first plate 12A and the second support hole 18 of the second plate 12B. The lever 22 is supported at the pair of support shafts 22A by the first plate 12A (first support hole 14) and the second plate 12B (second support hole 18), and is capable of pivoting (moving) in the front-rear direction (a specific direction) with the pair of support shafts 22A as the center axis. Movement of the lever 22 in the pivot radial direction is substantially limited at the pair of support shafts 22A by the first plate 12A (first support hole 14) and the second plate 12B (second support hole 18), and movement of the lever 22 in the pivot axial direction (left-right direction) is substantially limited by the first plate 12A (right wall) and the second plate 12B (right wall).

An upper side portion of the lever 22 extends out toward the upper side of the housing 12, and an upper end portion of the lever 22 is capable of being pivot-operated in the front-rear direction by an occupant of the vehicle (particularly the driver). The lever 22 is accordingly capable of being pivot-operated to an "R" position (reverse position), an "N" position (neutral position), an "H" position (home position), an "N" position (neutral position), and a "D" position (drive position), serving as shift positions on progression from the front side toward the rear side.

A rectangular column shaped restricting protrusion 24 (see Fig. 4), configuring a restricting means, is integrally provided at a lower face of a left side portion of the lever 22, and the restricting protrusion 24 is elongated along the front-rear direction. The restricting protrusion 24 projects out toward the lower side, and the restricting protrusion 24 is inserted into the restricting hole 20 between the first plate 12A and the second plate 12B. The restricting protrusion 24 has a slightly smaller left-right direction dimension than the restricting hole 20, and the restricting protrusion 24 is slightly separated from both left and right direction sides of a peripheral face of the restricting hole 20.

A lower end portion of the lever 22 projects out toward the left side, and pierces through the through-hole 16 of the first plate 12A. A circular shaped insertion hole 26 is formed in a right side and lower side portion of the lever 22. The insertion hole 26 extends in a downward direction on progression toward the right, and is open toward the lower side.

An indexing mechanism 28, serving as a biasing means, is provided at the shift lever device 10.

A substantially circular column shaped detent pin 30, serving as a moving member, is provided at the indexing mechanism 28, and the detent pin 30 is inserted (fitted) coaxially into the insertion hole 26 of the lever 22. The detent pin 30 is incapable of moving in the radial direction, but is capable of moving in the axial direction with respect to the lever 22 (insertion hole 26). A lower side portion of the detent pin 30 projects out from the insertion hole 26 toward the lower side, and a lower side face of the detent pin 30 projects out in a semispherical shape.

A compression coil spring 32, serving as a biasing member, spans across between the detent pin 30 and a bottom face (upper side face) of the insertion hole 26, and the compression coil spring 32 biases the detent pin 30 toward the lower side.

A block shaped detent slope 34, serving as an indexing member, is provided at the indexing mechanism 28, and the detent slope 34 is fixed to a right side and lower side corner portion inside the second plate 12B. The detent slope 34 is elongated along the front-rear direction, and a lower side face of the detent pin 30 abuts an upper side face of the detent slope 34 due to the biasing force of the compression coil spring 32. Plural protruding portions 34A, each with a substantially triangular shaped cross-section, are formed to the upper side face of the detent slope 34 at spacings along the length direction thereof. The lower side face of the detent pin 30 abuts a sloped face of the protruding portions 34A, such that the lever 22 is biased toward a shift position side by the compression coil spring 32, and is capable of moving toward the shift position side. When the lever 22 is pivot-operated in the front-rear direction, the detent pin 30 rides over the protruding portion 34A between shift positions in a state of being biased by the compression coil spring 32, thereby imparting an indexing sensation to the pivot-operation of the lever 22. The upper side face of the detent slope 34 (including the protruding portions 34A) is sloped in a direction toward the lower side on progression toward the left side, and a lower side portion of the lever 22 is biased toward the left side by the compression coil spring 32.

A detection mechanism 36 is provided at the shift lever device 10.

A substantially rectangular plate shaped printed wiring board 38, serving as detection means, is provided at the detection mechanism 36. The printed wiring board 38 is fixed inside the first plate 12A, and is disposed perpendicularly to the left-right direction. The left side of the printed wiring board 38 is covered by the cover 12C.

A substantially rectangular shaped magnet 40, serving as a detection section, is fixed by insert molding to a lower end portion of the left side portion of the lever 22. The magnet 40 is exposed at the left side inside the first plate 12A. A left face of the magnet 40 is disposed perpendicularly to the left-right direction and faces the printed wiring board 38 in the left-right direction. The printed wiring board 38 is capable of detecting a magnetic force generated by the magnet 40 to detect the shift position of the lever 22.

Explanation follows regarding operation of the present exemplary embodiment.

In the shift lever device 10 with the above configuration, the lever 22 is pivoted in the front-rear direction to change the shift position of the lever 22. In the detection mechanism 36, the printed wiring board 38 detects the magnetic force generated by the magnet 40 of the lever 22 to detect the shift position of the lever 22. In the indexing mechanism 28, when the lever 22 is pivot-operated in the front-rear direction, the detent pin 30 of the lever 22 runs over the protruding portion 34A that is between shift positions on the upper side face of the detent slope 34 while in a state of being biased by the compression coil spring 32, such that an indexing sensation is imparted to the pivot-operation of the lever 22.

Note that the upper side face of the detent slope 34 is sloped in a direction toward the lower side on progression toward the left side, such that the lower side portion of the lever 22 is biased toward the left side, and the magnet 40 is biased toward the printed wiring board 38 side, by the compression coil spring 32.

Thus, when the lever 22 is pivoted in the front-rear direction, separation between the magnet 40 and the printed wiring board 38 are suppressed by the compression coil spring 32. Thus even supposing cases in which an error (including an assembly error) has occurred in at least one of the lever 22 (particularly the support shafts 22A), or the first plate 12A (particularly the first support hole 14) or the second plate 12B (particularly the second support hole 18) of the housing 12, separation between the magnet 40 and the printed wiring board 38 can be suppressed, enabling excellent detection of the magnetic force of the magnet 40 by the printed wiring board 38, enabling the detection accuracy of the shift position of the lever 22 by the detection mechanism 36 to be improved, and enabling the pivot angle (pivot stroke) between the shift positions of the lever 22 to be reduced.

The printed wiring board 38 is disposed at the left side (laterally with respect to the front-rear direction, this being the pivot direction) of the lever 22 (magnet 40). Thus, in contrast to cases in which the printed wiring board 38 is disposed at the upper side or lower side of the lever 22 (magnet 40), a large separation can be suppressed from occurring between the magnet 40 and the printed wiring board 38 depending on the pivot position of the lever 22 in the front-rear direction, and the detection accuracy of the shift position of the lever 22 by the detection mechanism 36 can be effectively improved. Moreover, in contrast to cases in which the printed wiring board 38 is disposed at the upper side or lower side of the lever 22 (magnet 40), the lever 22 (magnet 40) can be easily biased toward the printed wiring board 38 side, and separation between the magnet 40 and the printed wiring board 38 can be suppressed.

The printed wiring board 38 is fixed to and installed in to the housing 12 (first plate 12A). There is accordingly no need to provide separate components in order to install the printed wiring board 38, such that the number of components can be reduced, error can be suppressed from occurring in the installation position of the printed wiring board 38, and the detection accuracy of the shift position of the lever 22 by the detection mechanism 36 can be effectively improved.

The magnet 40 is fixed to the lever 22 by insert molding. Thus the lever 22 and the magnet 40 can be configured as an integral component, the number of components can be reduced, error in the position of the magnet 40 with respect to the lever 22 can be suppressed from occurring, and the detection accuracy of the shift position of the lever 22 by the detection mechanism 36 can be effectively improved.

Supposing that an excessive load (a higher load force than a normal pivot-operation force) has acted on the lever 22, the restricting protrusion 24 of the lever 22 abuts the peripheral face of the restricting hole 20 between the first plate 12A and the second plate 12B, and pivoting of the lever 22 toward the left side and the right side is restricted. This enables the lower side portion of the lever 22 to be restricted from pivoting toward the left side and the magnet 40 to be restricted from abutting the printed wiring board 38, thereby enabling damage to the printed wiring board 38 (particularly the elements) by the magnet 40 to be suppressed. This also enables the lower side portion of the lever 22 to be restricted from pivoting toward the right side and the magnet 40 to be restricted from separating from the printed wiring board 38, thereby enabling the printed wiring board 38 to be suppressed from becoming unable to detect the magnetic force generated by the magnet 40, and from becoming unable to detect the shift position of the lever 22.

Separation between the magnet 40 and the printed wiring board 38 are also suppressed by the indexing mechanism 28. There is accordingly no need to provide a separate mechanism in order to suppress separation between the magnet 40 and the printed wiring board 38, enabling the configuration to be simplified.

Support of the lever 22 (support shafts 22A) by the first plate 12A (first support hole 14) and the second plate 12B (second support hole 18) is released by the first plate 12A and the second plate 12B of the housing 12 being disassembled (divided). This enables the lever 22 (support shafts 22A) to be supported by the first plate 12A (first support hole 14) and the second plate 12B (second support hole 18) by assembling the first plate 12A and the second plate 12B together, and enables the lever 22 to be easily assembled to the first plate 12A and the second plate 12B.

Note that in the present exemplary embodiment, biasing the magnet 40 toward the printed wiring board 38 side suppresses separation between the magnet 40 and the printed wiring board 38 when the lever 22 is pivoted in the front-rear direction. However, it is sufficient that separation between the magnet 40 and the printed wiring board 38 can be suppressed when the lever 22 is pivoted in the front-rear direction, and the magnet 40 may be biased toward the opposite side to the printed wiring board 38.

In the present exemplary embodiment, the magnet 40 is fixed to the lever 22 by insert molding, and the lever 22 and the magnet 40 configure an integral component. However, the magnet 40 may be fixed to the lever 22 as a separate component.

In the present exemplary embodiment, the printed wiring board 38 is provided at the housing 12, and the magnet 40 is provided at the lever 22. However, the magnet 40 may be provided at the housing 12, and the printed wiring board 38 may be provided at the lever 22.

In the present exemplary embodiment, the shift lever device 10 is a shift-by-wire type shift device. However, the shift lever device 10 may be a shift device other than a shift-by-wire type (such as a mechanical cable type).

In the present exemplary embodiment, the shift lever device 10 is a floor-mounted type shift device, and is installed at the floor section of the vehicle cabin. However, the shift lever device 10 may be installed to a steering column cover or an instrument panel in the vehicle cabin.

In a shift device, a lever is pivoted to change a shift position of the lever. A printed wiring board detects a magnetic force generated by a magnet of the lever to detect the shift position of the lever. Note that the lever is biased by a compression coil spring to suppress separation between the magnet and the printed wiring board when the lever is pivoted. This accordingly enables excellent detection of the magnetic force of the magnet by printed wiring board, and enables the detection accuracy of the shift position of the lever to be improved.

## Claims

1. A shift device (10) comprising:
a supporting body (12) that can be provided at a vehicle body side;
a shift lever (22) that is supported by the supporting body (12) and that is capable of being pivoted in a front-rear direction by a vehicle driver to change a shift position of the shift lever (22);
a detection section (40) that is provided at the shift lever (22);
a detection means (38) that is provided at the supporting body (12) and that detects the detection section (40) so as to detect the shift position of the shift lever (22);
wherein the detection means (38) is disposed laterally with respect to the front-rear direction along which the shift lever (22) is pivoted;
**characterized by**
a restricting means (20, 24) that restricts at least one of approach or separation between the detection section (40) and the detection means (38);
wherein, when the shift lever (22) is pivoted in the front-rear direction, a biasing means (28) biases the shift lever (22) to suppress separation between the detection section (40) and the detection means (38) such that the detection section (40) is moved along the detection means (38).

2. The shift device (10) of claim 1, wherein
the biasing means (28) biases the shift lever (22) toward a shift position side.

3. The shift device (10) of any one of claim 1 or claim 2, wherein
the biasing means (28) biases the shift lever (22) toward a side at which the detection section (40) and the detection means (38) approach, or separate from, each other; and
displacement, due to the biasing means (28), of the shift lever (22) toward the side at which the detection section (40) and the detection means (38) approach, or separate from, each other is limited.

4. The shift device (10) of any one of claim 1 to claim 3, wherein
the detection section (40) is provided at the shift lever (22) by insert molding.

## Patentansprüche

1. Schaltvorrichtung (10) mit:
einem Stützkörper (12), der an einer Fahrzeugkörperseite vorgesehen sein kann;
einem Schalthebel (22), der durch den Stützkörper (12) gestützt ist und der durch einen Fahrzeugführer in einer Vorderseiten-Rückseiten-Richtung geschwenkt werden kann, um eine Schaltposition des Schalthebels (22) zu ändern;
einem Erfassungsabschnitt (40), der an dem Schalthebel (22) vorgesehen ist;
einem Erfassungsmittel (38), das an dem Stützkörper (12) vorgesehen ist und das den Erfassungsabschnitt (40) erfasst, um die Schaltposition des Schalthebels (22) zu erfassen;
wobei das Erfassungsmittel (38) bezüglich der Vorderseiten-Rückseiten-Richtung, entlang derer der Schalthebel (22) geschwenkt wird, seitlich angeordnet ist;
**gekennzeichnet durch**
ein Beschränkungsmittel (20, 24), das eine Annäherung oder/und eine Trennung zwischen dem Erfassungsabschnitt (40) und dem Erfassungsmittel (38) beschränkt;
wobei, wenn der Schalthebel (22) in der Vorderseiten-Rückseiten-Richtung geschwenkt wird, ein Vorspannmittel (28) den Schalthebel (22) vorspannt, um eine Trennung zwischen dem Erfassungsabschnitt (40) und dem Erfassungsmittel (38) derart zu unterdrücken, dass der Erfassungsabschnitt (40) entlang des Erfassungsmittel (38) bewegt wird.

2. Schaltvorrichtung (10) gemäß Anspruch 1, wobei
das Vorspannmittel (28) den Schalthebel (22) in Richtung einer Schaltpositionsseite vorspannt.

3. Schaltvorrichtung (10) gemäß einem der Ansprüche 1 oder 2, wobei
das Vorspannmittel (28) den Schalthebel (22) in Richtung einer Seite vorspannt, an der sich der Erfassungsabschnitt (40) und das Erfassungsmittel (38) zueinander annähern oder voneinander trennen; und
eine Verschiebung aufgrund des Vorspannmittels (28) des Schalthebels (22) in Richtung der Seite, an der sich der Erfassungsabschnitt (40) und das Erfassungsmittel (38) zueinander annähern oder voneinander trennen, begrenzt ist.

4. Schaltvorrichtung (10) gemäß einem der Ansprüche 1 bis 3, wobei
der Erfassungsabschnitt (40) an dem Schalthebel (22) durch Einsatzformen vorgesehen ist.

## Revendications

1. Dispositif de changement de vitesses (10) comprenant :
un corps de support (12) qui peut être prévu sur un côté de corps de véhicule ;
un levier de changement de vitesses (22) qui est supporté par le corps de support (12) et qui est apte à être pivoté dans une direction avant-arrière par un conducteur de véhicule pour changer une position de changement de vitesses du levier de changement de vitesses (22) ;
une section de détection (40) qui est prévue au niveau du levier de changement de vitesses (22) ;
un moyen de détection (38) qui est prévu au niveau du corps de support (12) et qui détecte la section de détection (40) de sorte à détecter la position de changement de vitesses du levier de changement de vitesses (22) ;
dans lequel le moyen de détection (38) est disposé latéralement par rapport à la direction avant-arrière le long de laquelle le levier de changement de vitesses (22) est pivoté ;
**caractérisé par**
un moyen de restriction (20, 24) qui restreint au moins une d'une approche ou d'une séparation entre la section de détection (40) et le moyen de détection (38) ;
dans lequel, lorsque le levier de changement de vitesses (22) est pivoté dans la direction avant-arrière, un moyen de sollicitation (28) sollicite le levier de changement de vitesses (22) pour supprimer la séparation entre la section de détection (40) et le moyen de détection (38) de sorte que la section de détection (40) soit déplacée le long du moyen de détection (38).

2. Dispositif de changement de vitesses (10) selon la revendication 1, dans lequel le moyen de sollicitation (28) sollicite le levier de changement de vitesses (22) vers un côté de position de changement de vitesses.

3. Dispositif de changement de vitesses (10) selon l'une quelconque de la revendication 1 ou la revendication 2, dans lequel
le moyen de sollicitation (28) sollicite le levier de changement de vitesses (22) vers un côté au niveau duquel la section de détection (40) et le moyen de détection (38) approchent, ou se séparent, l'un de l'autre ; et
le déplacement, dû au moyen de sollicitation (28), du levier de changement de vitesses (22) vers le côté au niveau duquel la section de détection (40) et le moyen de détection (38) approchent, ou se séparent, l'un de l'autre est limité.

4. Dispositif de changement de vitesses (10) selon l'une quelconque de la revendication 1 à la revendication 3, dans lequel
la section de détection (40) est prévue au niveau du levier de changement de vitesses (22) par moulage par insertion.
